# EUROPÄISCHE PATENTSCHRIFT

(11) **EP 0 928 266 B1**
(45) Veröffentlichungstag und Bekanntmachung des Hinweises auf die Patenterteilung: **27.03.2002**
(21) Anmeldenummer: 97942767.1
(22) Anmeldetag: 23.08.1997
(51) Int. Cl.: B60T 8/48

(54) **HYDRAULISCHE FAHRZEUGBREMSANLAGE**
HYDRAULIC MOTOR VEHICLE BRAKING SYSTEM
SYSTEME DE FREINAGE HYDRAULIQUE POUR VEHICULE

(30) Priorität: 26.09.1996 DE 19639560
(43) Veröffentlichungstag der Anmeldung: 14.07.1999
(73) Patentinhaber: ROBERT BOSCH GMBH, 70442 Stuttgart (DE)
(72) Erfinder: FRIEDOW, Michael, D-71723 Grossbottwar (DE)
(86) Internationale Anmeldenummer: DE9701913
(87) Internationale Veröffentlichungsnummer: WO9813241

(56) Entgegenhaltungen:
- EP-A- 0 566 344
- WO-A-92/17357
- DE-A- 4 000 836
- DE-A- 4 213 710
- DE-A- 4 222 954
- DE-A- 4 445 401
- DE-A- 4 446 525
- DE-C- 3 900 850

## Beschreibung

### Stand der Technik

Die Erfindung geht aus von einer hydraulischen Fahrzeugbremsanlage nach der Gattung des Patentanspruchs 1.

Es ist schon eine derartige hydraulische Fahrzeugbremsanlage bekannt (WO-A-92/17357), bei der in einer Leitung zwischen der ersten Druckkammer des Hauptbremszylinders und dem Vorratsbehälter eine Ventilanordnung vorgesehen ist, welche aus einem 2/2-Wegeventil mit parallelgeschaltenem Druckbegrenzungsventil besteht. Das Wegeventil nimmt federbetätigt seine Durchlaßstellung und elektromagnetbetätigt seine Sperrstellung ein. Es wird vom Steuergerät der Bremsanlage in die Sperrstellung geschaltet, wenn zum automatischen Bremsen die Pumpe in Betrieb gesetzt wird. Der von der Pumpe erzeugte Druck ist dann in der ersten Druckkammer des Hauptbremszylinders wirksam und bewirkt ein Verschieben des zweiten Kolbens, so daß der Druck in der zweiten Druckkammer des Hauptbremszylinders angehoben wird. Demzufolge steht in beiden Bremskreisen der Bremsanlage ohne Pedalbetätigung ein erhöhter Druck zur Verfügung, der mittels der Ventilanordnungen für die Bremsdruckmodulation moduliert in wenigstens einen Radbremszylinder eingesteuert werden kann. Das parallel zum Wegeventil angeordnete Druckbegrenzungsventil begrenzt den Pumpendruck. Von Nachteil ist jedoch der erhöhte Steuerungsaufwand für die elektrische Ansteuerung des 2/2-Wegeventils sowie der bauliche Aufwand für Wegeventil und Druckbegrenzungsventil.

Außerdem ist bei einer hydraulischen Kraftfahrzeugbremsanlage gemäß DE-A-4 000 836 ein Ventilmittel verwendet, welches sich in einem Bremskreis zwischen einem Hauptbremszylinder-Anschluß und Ventilanordnungen für die Bremsdruckmodulation in Radbremszylindern angetriebener Fahrzeugräder befindet. Das Ventilmittel läßt in seiner federbetätigten sowie vom Druck im Hauptbremszylinder unterstützten Stellung den Durchfluß von Druckmittel unbehindert zu. Es läßt sich vom Druck einer Pumpe zum Zwecke des automatischen Bremsens in eine zweite Stellung schalten, in welcher es den Durchfluß sperrt. Der Druck der Pumpe ist dann mittels der Ventilanordnungen in die Radbremszylinder einsteuerbar. Zum Schutz der Pumpe arbeitet das Ventilmittel in der zweiten Stellung als Druckbegrenzungsventil.

### Vorteile der Erfindung

Die erfindungsgemäße hydraulische Fahrzeugbremsanlage mit den kennzeichnenden Merkmalen des Anspruchs 1 hat demgegenüber den Vorteil, daß das Ventilmittel in Abhängigkeit von der Höhe des beim Betrieb der Pumpe erzeugten Drucks schaltbar ist. Das Steuergerät der Bremsanlage kann daher mit weniger Aufwand ausgebildet sein als beim bekannten Entwicklungsstand. Schließlich schützt das Ventilmittel die Pumpe vor Überlastung.

Durch die in den Unteransprüchen aufgeführten Maßnahmen sind vorteilhafte Weiterbildungen und Verbesserungen der im Patentanspruch 1 angegebenen hydraulischen Fahrzeugbremsanlage möglich.

Mit der im Anspruch 2 gekennzeichneten Ausgestaltung der Erfindung wird die hydraulische Fahrzeugbremsanlage zu einer solchen fortgebildet, bei der die an den Vorratsbehälter angeschlossene Pumpe lediglich Ladedruck auf niedrigem Niveau liefern muß, um die Hochdruckpumpen mit Druckmittel zu versorgen, damit diese im automatischen Bremsbetrieb ausreichend schnell Hochdruck in den Bremskreisen bereitstellen können. Diese Anforderung an die Pumpe ist insofern vorteilhaft, als hierfür eine preiswerte Ausführungsform mit niedrigem Leistungsbedarf Anwendung finden kann. Von Vorteil ist, daß die im Vergleich zu den Hochdruckpumpen auf relativ niedriger Druckhöhe betriebene Pumpe den Hauptbremszylinder gering belastet, d. h. für die Verbindung zwischen dem Hauptbremszylinder und dem Vorratsbehälter kann die übliche Steckverbindung an dem ersten und dritten Anschluß des Hauptbremszylinders verwendet werden.

In den weiteren Ansprüchen 3 bis 7 sind Ausführungsformen für das Ventilmittel angegeben, die aus wenigen, einfach zu fertigenden Bauteilen besteht sowie als Baugruppe prüfbar und schnell montierbar ist.

### Zeichnung

Ein Ausführungsbeispiel der erfindungsgemäßen hydraulischen Fahrzeugbremsanlage ist in der Zeichnung dargestellt und nachfolgend näher beschrieben. Es zeigen Figur 1 ein Schaltschema der Fahrzeugbremsanlage, Figur 2 einen Längsschnitt eines Hauptbremszylinders mit Vorratsbehälter der Fahrzeugbremsanlage mit einem wirkungsmäßig zwischen einer Druckkammer des Hauptbremszylinders und dem Vorratsbehälter angeordneten Ventilmittel, Figuren 3 bis 6 verschiedene Ausführungsformen für das Ventilmittel im Schnitt in größerem Maßstab.

### Beschreibung des Ausführungsbeispiels

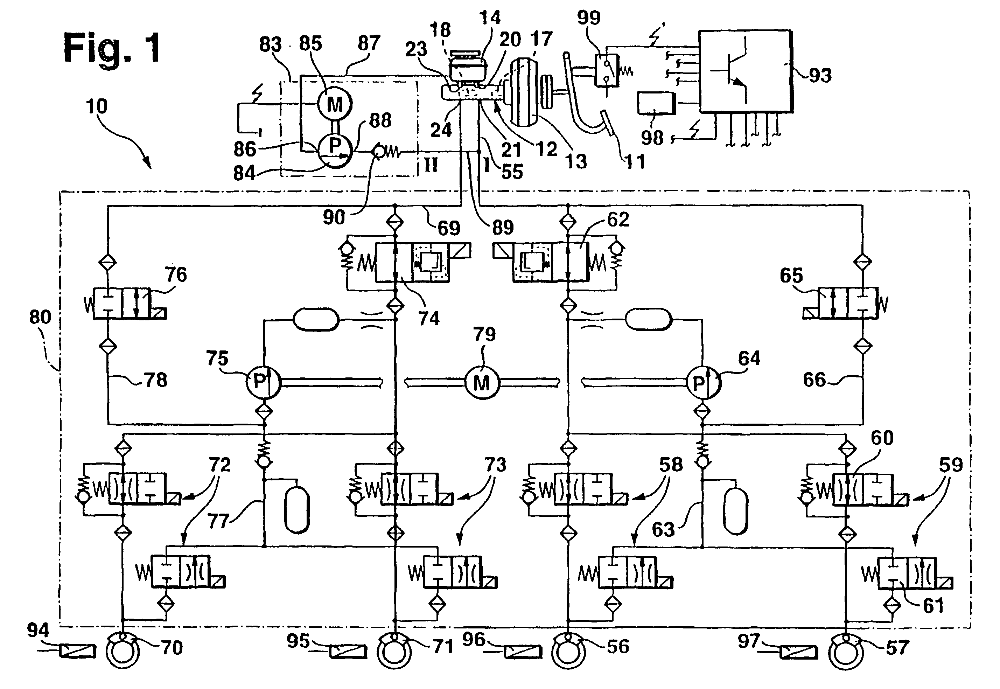

Eine in Figur 1 schematisch dargestellte hydraulische Fahrzeugbremsanlage 10 ist zum Bremsen per Bremspedalbetätigung sowie zum automatischen Bremsen, z. B. für Fahrdynamikregelung (FDR), ausgebildet. Sie weist ferner ein Antiblockiersystem (ABS) auf und ist auch für Antriebsschlupfregelung (ASR) fortgebildet.

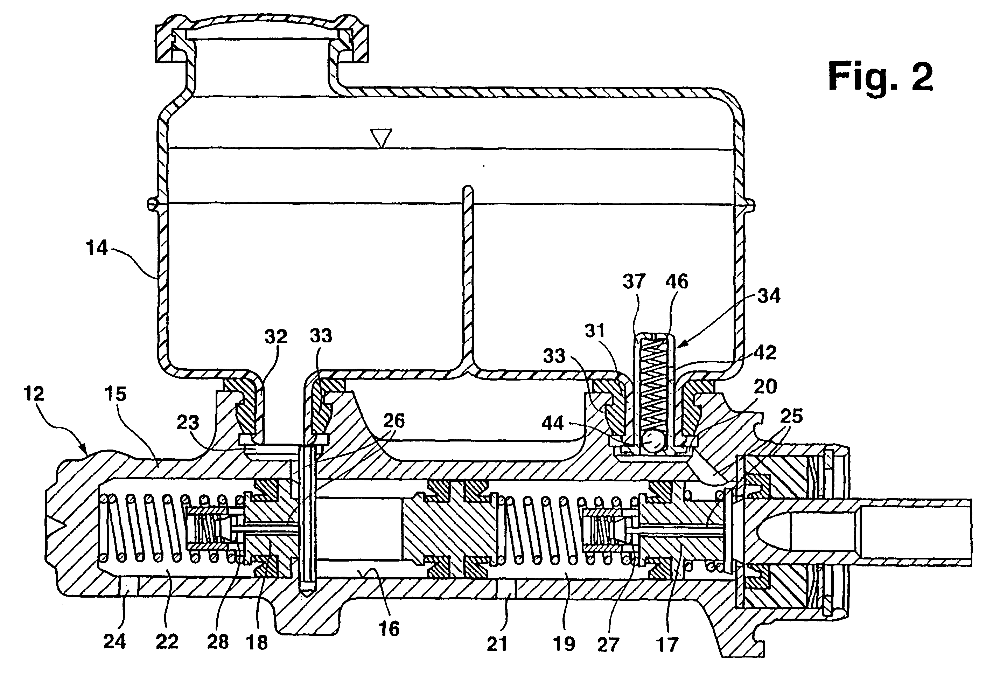

Die Fahrzeugbremsanlage 10 hat einen durch ein Bremspedal 11 betätigbaren, zweikreisigen Hauptbremszylinder 12 mit Bremskraftverstärker 13 sowie aufgesetztem Druckmittel-Vorratsbehälter 14. Der Hauptbremszylinder 12 besitzt ein Gehäuse 15 mit einer Bohrung 16, in welcher ein erster, in Abhängigkeit vom Niedertreten des Bremspedals 11 verschiebbarer Kolben 17 sowie ein zweiter Kolben 18 auf der zum Bremspedal entgegengesetzten Seite des ersten Kolbens aufgenommen sind (Figur 2). Zwischen dem ersten Kolben 17 und dem zweiten Kolben 18 befindet sich eine erste Druckkammer 19, die mit einem am Gehäuse 15 des Hauptbremszylinders 12 ausgebildeten ersten Anschluß 20 sowie einem zweiten Anschluß 21 in Verbindung steht. Der Hauptbremszylinder 12 hat an den zweiten Kolben 18 angrenzend an dessen zur ersten Druckkammer 19 entgegengesetzten Seite eine zweite Druckkammer 22 mit einem an dem Gehäuse 15 ausgebildeten dritten Anschluß 23 und einem vierten Anschluß 24. Bei nicht betätigtem Bremspedal 11 besteht eine hydraulische Verbindung zwischen dem ersten Anschluß 20 und dem zweiten Anschluß 21 aufgrund eines Durchgangs 25 im Gehäuse 15 des Hauptbremszylinders 12 sowie im ersten Kolben 17. In entsprechender Weise besteht bei nicht betätigtem Bremspedal 11 eine hydraulische Verbindung zwischen dem dritten Anschluß 23 und dem vierten Anschluß 24 aufgrund eines Durchgangs 26 im Gehäuse 15 und zweiten Kolben 18. Bei getretenem Bremspedal 11 besteht dagegen keine hydraulische Verbindung zwischen dem ersten Anschluß 20 und dem zweiten Anschluß 21 bzw. zwischen dem dritten Anschluß 23 und dem vierten Anschluß 24 aufgrund eines den Durchgang 25 bzw. 26 im jeweiligen Kolben 17 bzw. 18 sperrenden Zentralventils 27 bzw. 28. Der Hauptbremszylinder 12 ist handelsüblich und seine Funktion ist bekannt.

Der Druckmittelvorratsbehälter 14 hat einen ersten Stutzen 31 und einen zweiten Stutzen 32. Der erste Stutzen 31 des Vorratsbehälters 14 greift in den ersten Anschluß 20 des Hauptbremszylinders 12 ein, der zweite Stutzen 32 ist dem dritten Anschluß 23 des Hauptbremszylinders zugeordnet. Dichtelemente 33 dichten die beiden Stutzen 31 und 32 des Vorratsbehälters 14 gegen das Gehäuse 15 des Hauptbremszylinders 12 ab und sichern den Vorratsbehälter gegen Abziehen vom Hauptbremszylinder. Während der zweite Stutzen 32 des Vorratsbehälters 14 frei in den dritten Anschluß 23 des Hauptbremszylinders 12 mündet, befindet sich im ersten Stutzen 31 des Vorratsbehälters ein als Druckventil ausgebildetes Ventilmittel 34, mittels dem beim automatischen Bremsen das Durchströmen der ersten Druckkammer 19 des Hauptbremszylinders 12 hin zum Vorratsbehälter 14 wenigstens behinderbar ist, wie dies weiter unten noch ausgeführt wird.

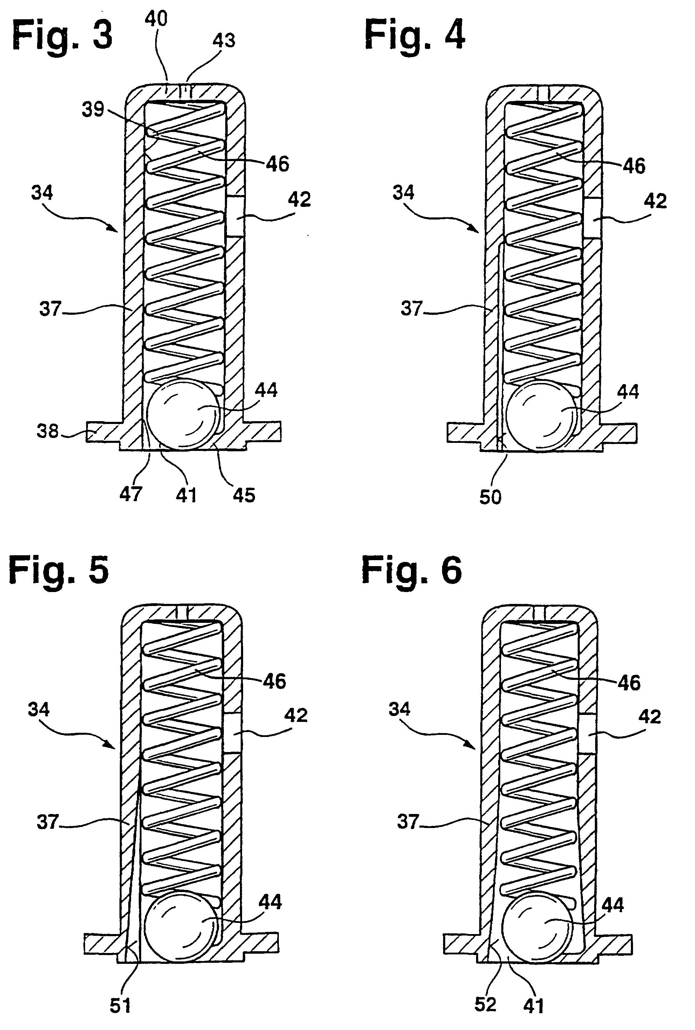

Das Ventilmittel 34 hat ein patronenförmiges Gehäuse 37, mit dem es passend, d. h. umfangsseitig abgedichtet, von unten in den ersten Stutzen 31 des Druckmittelvorratsbehälters 14 eingesteckt ist. Mit einem Flansch 38 ist das Gehäuse 37 axial am ersten Stutzen 31 abgestützt. Das Ventilmittel 34 weist in seinem Gehäuse 37 eine im wesentlichen zylindrische Bohrung 39 auf, welche mit einem Boden 40 des Gehäuses begrenzt ist (Figur 3). Während sich der Boden 40 des Gehäuses 37 innerhalb des Druckmittelvorratsbehälters 14 befindet, liegt die Mündung 41 der Bohrung 39 im ersten Anschluß 20 des Hauptbremszylinders 12. Die Bohrung 39 kommuniziert daher mündungsseitig mit der ersten Druckkammer 19 des Hauptbremszylinders 12. Mündungsfern, d. h. etwa auf halber Bohrungslänge, ist das Gehäuse 37 mit einer Überströmöffnung 42 versehen, welche innerhalb des Druckmittelvorratsbehälters 14 liegt. Die Überströmöffnung 42 bildet eine hydraulische Verbindung zwischen der Bohrung 39 des Gehäuses 37 und dem Vorratsbehälter 14. Ferner ist im Boden 40 des Gehäuses 37 eine Ausgleichsöffnung 43 kleinen Querschnitts vorgesehen. Mündungsseitig befindet sich in der Bohrung 39 ein kugelförmiges Ventilglied 44, welches am Austritt aus dem Gehäuse 37 durch einen Anschlag 45 gehindert ist. Außerdem ist in der Bohrung 39 eine Ventilfeder 46 in der Form der Schraubendruckfeder aufgenommen. Diese ist mit Vorspannung einerseits am Ventilglied 44 und andererseits am Boden 40 des Gehäuses 37 abgestützt. Das Ventilglied 44 und die zylindrische Bohrung 39 des Gehäuses 37 sind derart aufeinander abgestimmt, daß sich zwischen dem Ventilglied und dem Gehäuse ein Drosselquerschnitt 47 befindet. Dieser Drosselquerschnitt 47 ist flächenmäßig kleiner als der Querschnitt der Überströmöffnung 42. Das Ventilglied 44 ist gegen die Kraft der Ventilfeder 46 in Richtung auf dem Boden 40 des Gehäuses 37 bewegbar. In einem von der gezeichneten Stellung ausgehenden Teilhub steuert das Ventilglied 44 den Drosselquerschnitt 47. In einem Resthub gibt das Ventilglied 44 dagegen die Überströmöffnung 42 frei.

Bei der Ausführungsform des Ventilmittels 34 nach Figur 3 ist der Drosselquerschnitt 47 durch unterschiedliche Durchmesser von Ventilglied 44 und Bohrung 39 des Gehäuses 37 gebildet. Bei den weiteren Ausführungsformen für das Ventilmittel 34 nach den Figuren 4 bis 6 ist die Bohrung 39 des Gehäuses 37 zwischen der Mündung 41 und der Überströmöffnung 42 mit einer Querschnittsabweichung versehen, welche den Drosselquerschnitt 47 bildet. Bei der Ausführungsform nach Figur 4 besteht die Querschnittsabweichung aus einer längslaufenden Nut 50 gleichen Querschnitts. Bei der Ausführungsform nach Figur 5 ist dagegen die Querschnittsabweichung von einer längslaufenden Nut 51 mit sich gegen den Boden 40 des Gehäuses 37 verringerndem Querschnitt ausgebildet. Bei der Ausführungsform nach Figur 6 besteht die Querschnittsabweichung aus einem sich gegen die Mündung 41 konisch erweiternden Bohrungsabschnitt 52. Bei allen drei Ausführungsformen nach den Figuren 4 bis 6 weist im Gegensatz der Ausführungsform nach Figur 3 das kugelförmige Ventilglied 44 einen nahezu dem Durchmesser der zylindrischen Bohrung 39 des Gehäuses 37 entsprechenden Durchmesser auf.

Vom zweiten Anschluß 21 des Hauptbremszylinders 12 geht eine erste Bremsleitung 55 eines Bremskreises I aus, welche zu Gruppen von Radbremszylindern 56 und 57 zugeordneter Fahrzeugräder führt. Den Radbremszylindern 56 und 57 ist jeweils eine Ventilanordnung 58 und 59 für die Bremsdruckmodulation in den Radbremszylindern zugeordnet. Die Ventilanordnungen 58 und 59 weisen jeweils ein Bremsdruckaufbauventil 60 und jeweils ein Bremsdruckabbauventil 61 auf. Zwischen den Ventilanordnungen 58 sowie 59 und dem zweiten Anschluß 21 des Hauptbremszylinders 12 befindet sich in der ersten Bremsleitung 55 ein Sperrventil 62 mit Druckbegrenzungsfunktion in seiner Sperrstellung. Von den Bremsdruckabbauventilen 61 der Ventilanordnungen 58 und 59 geht eine Rückführleitung 63 aus, in welcher eine Hochdruckpumpe 64 angeordnet ist. Die Rückführleitung 63 ist zwischen den Ventilanordnungen 58 sowie 59 und dem Sperrventil 62 an die erste Bremsleitung 55 angeschlossen. Außerdem ist ein Wegeventil 65 vorgesehen, welches in einer Saugleitung 66 liegt. Diese ist durch hauptbremszylinderseitigen Anschluß an die erste Bremsleitung 55 mit dem zweiten Anschluß 21 des Hauptbremszylinders 12 verbunden und führt saugseitig der Hochdruckpumpe 64 zur Rückführleitung 63.

An den vierten Anschluß 24 des Hauptbremszylinders 12 ist eine zweite Bremsleitung 69 eines zweiten Bremskreises II angeschlossen, die mit einer Gruppe von Radbremszylindern 70 und 71 in Verbindung steht. Der Bremskreis II ist in gleicher Weise wie der Bremskreis I ausgebildet. Er besitzt den Radbremszylindern 70 und 71 zugeordnete Ventilanordnungen 72 bzw. 73 für die Bremsdruckmodulation, ein Sperrventil 74 mit Druckbegrenzungsfunktion, eine Hochdruckpumpe 75 sowie ein Wegeventil 76 und ferner eine Rückführleitung 77 sowie eine Saugleitung 78. Die beiden Hochdruckpumpen 64 und 75 der beiden Bremskreise I und II sind durch einen gemeinsamen elektrischen Motor 79 antreibbar. Die genannten Ventile, Leitungen, Pumpen und der Motor sind Bestandteil einer als Hydroaggregat 80 bezeichneten Baueinheit der Bremsanlage 10, was in Figur 1 als strichpunktierte Umrahmung dargestellt ist.

Als weitere Baueinheit der hydraulischen Fahrzeugbremsanlage 10 ist eine Pumpeinrichtung 83 vorgesehen, welche eine Niederdruckpumpe 84 mit einem elektrischen Antriebsmotor 85 aufweist. Ein Sauganschluß 86 der Pumpe 84 ist mit einer Saugleitung 87 an den Druckmittel-Vorratsbehälter 14 angeschlossen. Eine von einem Druckanschluß 88 der Pumpe 84 ausgehende Druckleitung 89 ist an die erste Bremsleitung 55 des Bremskreises I angeschlossen, steht also hydraulisch leitend mit dem zweiten Anschluß 21 des Hauptbremszylinders 12 in Verbindung. In der Druckleitung 89 befindet sich ein Rückschlagventil 90 mit Durchlaßrichtung zur ersten Bremsleitung 55.

Zu der hydraulischen Fahrzeugbremsanlage 10 gehört außerdem ein elektronisches Steuergerät 93 für die Steuerung der Funktion der Bremsanlage beim automatischen Bremsen sowie bei einer Blockierschutz- oder Antriebsschlupfregelung. An das Steuergerät 93 sind den einzelnen Fahrzeugrädern zugeordnete Raddrehungssensoren 94, 95, 96 und 97 angeschlossen. Weitere mit dem Steuergerät 93 verbundene Sensoren sind durch das Symbol 98 dargestellt. Diese Sensoren erfassen beispielsweise den Lenkradwinkel, die Giergeschwindigkeit und Querbeschleunigung des Fahrzeugs sowie ferner den hauptbremszylinderseitigen Druck in der ersten Bremsleitung 55. Das Steuergerät 93 steht außerdem in Verbindung mit einem eine Betätigung des Bremspedals 11 erfassenden Pedalschalter 99. Das Steuergerät 93 ist schließlich noch zum Schalten der im Hydroaggregat 80 zusammengefaßten Ventile und zum Steuern der Pumpenantriebsmotoren ausgebildet.

Die Funktionsweise der hydraulischen Fahrzeugbremsanlage 10 ist kurz umrissen folgende:

Bei Bremsungen per Pedalbetätigung ohne Blockiergefahr verbleiben die Ventile 60 und 61 der Ventilanordnungen 58, 59, 72, 73 für die Bremsdruckmodulation, die Sperrventile 62, 74 und die Wegeventile 65, 76 der beiden Bremskreise I und II in der gezeichneten Stellung, und die Pumpen 64, 75, 84 werden nicht in Betrieb gesetzt. Im Hauptbremszylinder 12 erzeugter Druck wird durch die Bremsleitungen 55 und 69 in die Radbremszylinder 56, 57, 70, 71 eingesteuert. Während dieser fahrerbetätigten Bremsung verhindert das Rückschlagventil 90 einen Druckmittelverlust aus dem Bremskreis I durch die Niederdruckpumpe 84 hindurch zum Druckmittel-Vorratsbehälter 14 des Hauptbremszylinders 12.

Bei fahrerbetätigtem Bremsen mit Blockiergefahr wird das unzulässig großem Bremsschlupf unterworfene Fahrzeugrad dadurch stabilisiert, daß das Steuergerät 93 den Bremsdruck im dem betreffenden Fahrzeugrad zugeordneten Radbremszylinder durch Schalten der Ventile 60 und 61 der zugeordneten Ventilanordnung für die Bremsdruckmodulation in Phasen für Druckabbau, Druckhalten und Druckaufbau moduliert. Der Antriebsmotor 79 der Hochdruckpumpen 64 und 75 ist dabei vom Steuergerät 93 in Betrieb gesetzt. Sind mehrere Fahrzeugräder der Blockiergefahr unterworfen, findet die Blockierschutzregelung an jedem der den Fahrzeugrädern zugeordneten Radbremszylindern statt.

Bei einer Antriebsschlupfregelung, welche ebenso wie beispielsweise die weiter unten beschriebene Fahrdynamikregelung zum automatischen Bremsen gehört, wird ein unzulässig hohem Schlupf unterworfenes Fahrzeugrad durch Einsteuern von Bremsdruck in den zugeordneten Radbremszylinder stabilisiert. Hierzu schaltet das Steuergerät 93 die Niederdruckpumpe 84 sowie die Hochdruckpumpen 64 und 75 ein. Ist beispielsweise das dem Radbremszylinder 56 im Bremskreis I zugeordnete Fahrzeugrad zu stabilisieren, so schaltet das Steuergerät 93 das Sperrventil 62 und das Bremsdruckaufbauventil 60 der Ventilanordnung 59 in die Sperrstellung, während das Wegeventil 65 in die Durchlaßstellung geschaltet wird. Die Niederdruckpumpe 84 entnimmt Druckmittel aus dem Vorratsbehälter 14 und fördert dieses in die erste Bremsleitung 55. Das geförderte Druckmittel gelangt einerseits in die Saugleitung 66 und andererseits durch den zweiten Anschluß 21 des Hauptbremszylinders 12 in dessen erste Druckkammer 19. Da bei nichtbetätigtem Bremspedal 11 das Zentralventil 27 im ersten Kolben 17 offen und daher der Durchgang 25 zum ersten Anschluß 20 des Hauptbremszylinders 12 für das geförderte Druckmittel durchlässig ist, wird das Ventilmittel 34 beim Abströmen des Druckmittels von der ersten Druckkammer 19 in den Vorratsbehälter 14 in der Weise wirksam, daß sich vor dem Drosselquerschnitt 47 ein Staudruck aufbaut, welcher einen Anstieg des Förderdruckes der Niederdruckpumpe 84 auf ein durch die Auslegung des Ventilmittels 34 vorgegebenes Druckniveau hervorruft. Dieses Druckniveau ist während des Teilhubes des Ventilgliedes 44 im Ventilmittel 34 aufgrund der Auslegung der Ventilfeder 46 sowie durch die Ausbildung der Querschnittsabweichungen der zylindrischen Bohrungen 39 des Gehäuses 37 in Grenzen veränderlich. Der von der Niederdruckpumpe 84 bereitgestellte Druck wird jedoch bei einer Höhe von beispielsweise 20 bar dadurch begrenzt, daß das Ventilglied 44 gegen den Widerstand der Ventilfeder 46 die Überströmöffnung 42 erreicht und deren Querschnitt unter Umgehung des Drosselquerschnitts 47 zum Abströmen von Druckmittel in den Vorratsbehälter 14 freigibt. Das Ventilmittel 34 übt somit auch eine Druckbegrenzungsfunktion für die Niederdruckpumpe 84 aus.

Der aufgrund der Wirkung des Ventilmittels 34 eingestellte Förderdruck der Niederdruckpumpe 84 wird durch die Saugleitung 66 auch am Saugeingang der Hochdruckpumpe 64 wirksam und verbessert damit deren Füllung, insbesondere bei niedrigen Außentemperaturen. Das von der Hochdruckpumpe 64 bereitgestellte Druckmittel erzeugt einen Bremsdruck im Radbremszylinder 56, der mit Hilfe der Ventilanordnung 58 moduliert wird, um das zugeordnete Fahrzeugrad zu stabilisieren.

Der von der Niederdruckpumpe 84 zur Verfügung gestellte Druck, welcher als Ladedruck wie vorbeschrieben die Füllung der Hochdruckpumpe 64 verbessert und den automatischen Bremseneingriff beschleunigt, bewirkt im Hauptbremszylinder 12 ein Verschieben des zweiten Kolbens 18, so daß dieser nach dem Schließen seines Zentralventils 28 in der zweiten Druckkammer 22 einen Druck erzeugt, welcher im Bremskreis II wirksam wird. Wenn, wie beim Beispiel, keines der dem Bremskreis II zugeordneten Fahrzeugräder unzulässig hohem Antriebsschlupf unterworfen ist, so schaltet das Steuergerät 93 wenigstens das Sperrventil 74 in die Sperrstellung, um das Anlegen der Radbremsen zu verhindern. Ist dagegen auch im Bremskreis II wenigstens ein Fahrzeugrad von unzulässig hohem Antriebsschlupf betroffen, so wird der mittelbar von der Niederdruckpumpe 84 in der zweiten Druckkammer 22 des Hauptbremszylinders 12 erzeugte Druck durch entsprechende Ventilschaltung benutzt, um die Hochdruckpumpe 75 des Bremskreises II mit Druckmittel zu füllen.

Im Falle von mit und ohne Bremspedalbetätigung auftretender Schleudergefahr, welche vom Steuergerät 93 mit Hilfe der Signale der Raddrehungssensoren 94, 95, 96, 97, des Lenkradwinkelsensors 98, des Giergeschwindigkeitssensors 98 und des Querbeschleunigungssensors 98 erkannt wird, vermag die Fahrzeugbremsanlage 10 durch fahrerunabhängigen und radindividuellen automatischen Bremseneingriff die Fahrzeugbewegung zu stabilisieren (Fahrdynamikregelung). Hierbei wird durch gezielten Bremsdruckaufbau oder Bremsdruckabbau Einfluß auf den Bremsschlupf und damit auf die Seitenführungskräfte an den entsprechenden Fahrzeugrädern genommen, um die Schleudergefahr zu verringern oder das Schleudern des Fahrzeuges zu beenden. Der hierzu benötigte Bremsdruck wird wie bei der Antriebsschlupfregelung von den Hochdruckpumpen 64 und/oder 75 im Zusammenwirken mit der Niederdruckpumpe 84 bereitgestellt.

## Patentansprüche

1. Hydraulische Fahrzeugbremsanlage (10) zum Bremsen per Bremspedalbetätigung und zum automatischen Bremsen
- mit einem Hauptbremszylinder (12), der ein Gehäuse (15), in diesem eine Bohrung (16) und in der Bohrung (16) einen ersten verschiebbaren Kolben (17), der in Abhängigkeit vom Niedertreten eines Bremspedals (11) verschiebbar ist, einen zweiten Kolben (18) auf der zum Bremspedal (11) entgegengesetzten Seite des ersten Kolbens (17), zwischen dem ersten und zweiten Kolben (17, 18) eine erste Druckkammer (19), die mit einem am Gehäuse (15) ausgebildeten ersten Anschluß (20) sowie einem zweiten Anschluß (21) in Verbindung ist, und an den zweiten Kolben (18) angrenzend an seiner zur ersten Druckkammer (19) entgegengesetzten Seite eine zweite Druckkammer (22) mit einem an dem Gehäuse (15) ausgebildeten dritten Anschluß (23) und einen vierten Anschluß (24) hat, wobei bei getretenem Bremspedal (11) zwischen dem ersten und zweiten Anschluß (20, 21) sowie zwischen dem dritten und vierten Anschluß (23, 24) keine hydraulische Verbindung besteht,
- mit einem Vorratsbehälter (14) für Druckmittel, wobei der Vorratsbehälter (14) dem ersten und dem dritten Anschluß (20, 23) des Hauptbremszylinders (12) zugeordnet ist,
- mit einem im Bereich des ersten Anschlusses (20) des Hauptbremszylinders (12) angeordneten Ventilmittel (34), mittels dem beim automatischen Bremsen der Druck des Druckmittels beim Durchströmen der ersten Druckkammer (19) des Hauptbremszylinders (12) hin zum Vorratsbehälter (14) begrenzbar ist,
- mit einer Pumpe (84), die einen mit dem Vorratsbehälter (14) verbundenden Sauganschluß (86) und einen mit dem zweiten Anschluß (21) des Hauptbremszylinders (12) verbundenen Druckanschluß (88) besitzt zum Ansaugen von Druckmittel aus dem Vorratsbehälter (14) und zum Fördern zum zweiten Anschluß (21) des Hauptbremszylinders (12),
- mit einem an den zweiten Anschluß (21) des Hauptbremszylinders (12) angeschlossenen ersten Bremskreis (I) und mit einem an den vierten Anschluß (24) des Hauptbremszylinders (12) angeschlossenen zweiten Bremskreis (II), wobei jeder Bremskreis (I, II) eine Mehrzahl von Radbremszylindern (56, 57, 70, 71) zugeordneter Räder und Ventilanordnungen (58, 59, 72, 73) für die Bremsdruckmodulation in den Radbremszylindern (56, 57, 70, 71) aufweist,
- und mit einem Steuergerät (93) zur Durchführung von automatischem Bremsbetrieb mit Einschalten der Pumpe (84), **dadurch gekennzeichnet,**
**daß** das Ventilmittel (34) vom Druck der Pumpe (84) bei automatischem Bremsen betätigbar ist, bei niedrigem Pumpendruck das Durchströmen der ersten Druckkammer (19) des Hauptbremszylinders (12) hin zum Vorratsbehälter (14) für Druckmittel drosselt und bei demgegenüber erhöhtem Pumpendruck diesen Druck begrenzt.

2. Hydraulische Fahrzeugbremsanlage nach Anspruch 1, **dadurch gekennzeichnet, daß** die Pumpe (84) als eine Niederdruckpumpe ausgebildet ist,
**daß** den Ventilanordnungen (58, 59, 72, 73) für die Bremsdruckmodulation in beiden Bremskreisen (I, II) je eine Hochdruckpumpe (64, 75) zugeordnet ist,
**daß** im einen Bremskreis (I) die Hochdruckpumpe (64) saugseitig durch ein Wegeventil (65) hindurch an den zweiten Anschluß (21) des Hauptbremszylinders (12) und im anderen Bremskreis (II) die Hochdruckpumpe (75) saugseitig durch ein Wegeventil (76) hindurch an den vierten Anschluß (24) des Hauptbremszylinders (12) angeschlossen ist,
und **daß** bei nicht betätigtem Bremspedal (11) im automatischen Bremsbetrieb die Niederdruckpumpe (84) den Hochdruckpumpen (64, 75) Ladedruck zur Verfügung stellt.

3. Hydraulische Fahrzeugbremsanlage nach Anspruch 1, **dadurch gekennzeichnet, daß** das Ventilmittel (34) ein in seinem Gehäuse (37) angeordnetes Ventilglied (44) hat, welches an einer Ventilfeder (46) abgestützt ist und in einem Teilhub einen Drosselquerschnitt (47) steuert und in einem Resthub eine Überströmöffnung (42) freigibt.

4. Hydraulische Fahrzeugbremsanlage nach Anspruch 3, **dadurch gekennzeichnet, daß** das Ventilmittel (34) in seinem Gehäuse (37) eine im wesentlichen zylindrische Bohrung (39) mit einem Boden (40) und einer dem ersten Anschluß (20) des Hauptbremszylinders (12) zugeordneten Mündung (41) hat,
**daß** in der Bohrung (39) eine Schraubendruckfeder als Ventilfeder (46) und das kugelförmig ausgebildete Ventilglied (44) aufgenommen sind
und **daß** die Bohrung (39) mündungsfern mit der Überströmöffnung (42) kommuniziert.

5. Hydraulische Fahrzeugbremsanlage nach Anspruch 4, **dadurch gekennzeichnet, daß** die Bohrung (39) des Gehäuses (37) zwischen der Mündung (41) und der Überströmöffnung (42) eine Querschnittsabweichung aufweist, welche beispielsweise von einer längslaufenden Nut (50, 51) konstanten oder gegen den Boden (40) sich verringernden Querschnitts oder einem sich gegen die Mündung (41) konisch erweiternden Bohrungsabschnitt (52) gebildet ist.

6. Hydraulische Fahrzeugbremsanlage nach Anspruch 4, **dadurch gekennzeichnet, daß** das Ventilmittel (34) ein patronenförmiges Gehäuse (37) hat und in den ersten Anschluß (20) des Hauptbremszylinders (12) eingefügt ist, wobei die Mündung (41) der Bohrung (39) der ersten Druckkammer (19) des Hauptbremszylinders (12) und die Überströmöffnung (42) dem Vorratsbehälter (14) für Druckmittel zugeordnet ist.

7. Hydraulische Fahrzeugbremsanlage nach Anspruch 6, **dadurch gekennzeichnet, daß** das Ventilmittel (34) in einen Stutzen (31) des Vorratsbehälters (14) für Druckmittel passend eingesteckt ist, der in den ersten Anschluß (20) des Hauptbremszylinders (12) eingreift.

## Claims

1. Hydraulic vehicle brake system (10) for braking by brake-pedal actuation and for automatic braking,
- with a brake master cylinder (12) which has a housing (15), in the latter a bore (16) and, in the bore (16), a first displaceable piston (17) which is displaceable as a function of the depression of a brake pedal (11), a second piston (18) on that side of the first piston (17) which is opposite to the brake pedal (11), between the first and the second piston (17, 18) a first pressure chamber (19) which is connected to a first connection (20) formed on the housing (15) and to a second connection (21), and, adjacent to the second piston (18) on the side of the latter which is opposite the first pressure chamber (19), a second pressure chamber (22) with a third connection (23) formed on the housing (15) and a fourth connection (24), there being no hydraulic connection between the first and second connection (20, 21) and between the third and fourth connection (23, 24) when the brake pedal (11) is depressed,
- with a reservoir (14) for pressure medium, the reservoir (14) being assigned to the first and third connection (20, 23) of the brake master cylinder (12),
- with a valve means (34) which is arranged in the region of the first connection (20) of the brake master cylinder (12) and by which, during automatic braking, the pressure of the pressure medium, when it flows through the first pressure chamber (19) of the brake master cylinder (12), can be limited in relation to the reservoir (14),
- with a pump (84) which possesses a suction connection (86), connected to the reservoir (14), and a delivery connection (88), connected to the second connection (21) of the brake master cylinder (12), for sucking in pressure medium from the reservoir (14) and for conveying it to the second connection (21) of the brake master cylinder (12),
- with a first brake circuit (I) connected to the second connection (21) of the brake master cylinder (12) and with a second brake circuit (II) connected to the fourth connection (24) of the brake master cylinder (12), each brake circuit (I, II) having a plurality of wheel brake cylinders (56, 57, 70, 71) of associated wheels and valve arrangements (58, 59, 72, 73) for brake-pressure modulation in the wheel brake cylinders (56, 57, 70, 71), and
- with a control unit (93) for carrying out automatic braking operation with the switching-on of the pump (84),
**characterized**
**in that** the valve means (34) can be actuated by the pressure of the pump (84) during automatic braking, at a low pump pressure, throttles the flow through the first pressure chamber (19) of the brake master cylinder (12) in relation to the reservoir (14) for pressure medium and, when the pump pressure is increased with respect to the latter, limits this pressure.

2. Hydraulic vehicle brake system according to Claim 1, **characterized in that** the pump (84) is designed as a low-pressure pump, **in that** in each case a high-pressure pump (64, 75) is assigned to the valve arrangements (58, 59, 72, 73) for brake-pressure modulation in the two brake circuits (I, II), that, in one brake circuit (I), the high-pressure pump (64) is connected on the suction side, through a directional valve (65), to the second connection (21) of the brake master cylinder (12), and, in the other brake circuit (II), the high-pressure pump (75) is connected on the suction side, through a directional valve (76), to the fourth connection (24) of the brake master cylinder (12), and **in that**, with the brake pedal (11) not actuated, and in automatic braking operation, the low-pressure pump (84) supplies boost pressure to the high-pressure pumps (64, 75).

3. Hydraulic vehicle brake system according to Claim 1, **characterized in that** the valve means (34) has a valve member (44) which is arranged in its housing (37) and which is supported on a valve spring (46) and in a part-stroke controls a throttle cross section (47) and in a remaining stroke exposes an overflow orifice (42).

4. Hydraulic vehicle brake system according to Claim 3, **characterized in that** the valve means (34) has, in its housing (37), an essentially cylindrical bore (39) with a bottom (40) and with a mouth (41) assigned to the first connection (20) of the brake master cylinder (12), **in that** a helical compression spring, as a valve spring (46), and the spherically designed valve member (44) are received in the bore (39), and **in that** the bore (39) communicates with the overflow orifice (42) remotely from the mouth.

5. Hydraulic vehicle brake system according to Claim 4, **characterized in that** the bore (39) of the housing (37) has, between the mouth (41) and the overflow orifice (42), a cross-sectional deviation which is formed, for example, by a longitudinally running groove (50, 51) with a constant cross section or with a cross section decreasing towards the bottom (40) or by a bore portion (52) widening conically towards the mouth (41).

6. Hydraulic vehicle brake system according to Claim 4, **characterized in that** the valve means (34) has a cartridge-like housing (37) and is inserted into the first connection (20) of the brake master cylinder (12), the mouth (41) of the bore (39) being assigned to the first pressure chamber (19) of the brake master cylinder (12) and the overflow orifice (42) being assigned to the reservoir (14) for pressure medium.

7. Hydraulic vehicle brake system according to Claim 6, **characterized in that** the valve means (34) is plugged with a fit into a nipple (31) of the reservoir (14) for pressure medium, said nipple engaging into the first connection (20) of the brake master cylinder (12).

## Revendications

1. Système de freinage hydraulique de véhicule (10) pour freiner par l'actionnement de la pédale de frein et pour freiner automatiquement, comprenant :
- un maître-cylindre (12) dont le boîtier (15) comporte un alésage (16) dans lequel un premier piston coulissant (17) se déplace en fonction de l'enfoncement d'une pédale de frein (11), un second piston (18) du côté du premier piston (17) à l'opposé de la pédale de frein (11), avec entre le premier et le second piston (17, 18) une première chambre de pression (19) reliée à un premier ajutage (20) réalisé sur le boîtier (15) et un second ajustage (21), et sur le second piston (18), du côté opposé à celui adjacent à la première chambre (19), une seconde chambre de pression (22) avec un troisième branchement (23) relié au boîtier (15) et un quatrième branchement (24), sans aucune communication hydraulique lors de l'actionnement de la pédale de frein (11) entre le premier et le second ajutage (21, 22) ni entre le troisième et le quatrième ajutage (23, 24),
- un réservoir (14) pour du liquide hydraulique, le réservoir (14) étant associé au premier et au troisième ajutage (20, 23) du maître-cylindre (12),
- dans la zone du premier ajutage (20) du maître-cylindre (12) une soupape (34) qui, lors du freinage automatique, permet de limiter la pression du fluide sous pression lors du passage de la première chambre de pression (19) du maître-cylindre (12), vers le réservoir (14),
- une pompe (84) munie d'un ajutage d'alimentation (86) relié au réservoir (14) et un ajutage de pression (88) relié au second ajutage (21) du maître-cylindre de frein (12), pour aspirer le liquide hydraulique du réservoir (14) et le refouler vers le second ajutage (21) du maître-cylindre (12),
- un premier circuit de frein (I) relié au second ajutage (21) du maître-cylindre (12) et un second circuit de frein (II) relié au quatrième ajutage (24) du maître-cylindre (12), chaque circuit de frein (I, II) ayant plusieurs cylindres de frein de roue (56, 57, 70, 71) associés aux roues et des dispositifs de soupape (58, 59, 72, 73) correspondants pour moduler la pression de frein dans les cylindres de frein de roue (56, 57, 70, 71),
- et un appareil de commande (93) pour assurer le mode de freinage automatique en branchant la pompe (84),
**caractérisé en ce que**
la soupape (34) est actionnée par la pression de la pompe (84) lors du freinage automatique, et pour une faible pression de pompe, le passage de la première chambre de pression (19) du maître-cylindre de frein (12) vers le réservoir (14) assure l'étranglement du liquide hydraulique et pour une pression de pompe augmentée par rapport à la précédente cette soupape limite cette pression.

2. Système de freinage hydraulique de véhicule selon la revendication 1,
**caractérisé en ce que**
la pompe (84) est une pompe basse pression,
pour les dispositifs de soupape (58, 59, 72, 73) servant à la modulation de la pression de frein, chaque circuit de freinage (I, II) comporte une pompe haute pression (64, 75),
dans le premier circuit de frein (I), la pompe haute pression (64) est reliée par son côté aspiration, à travers un distributeur à tiroir (65) au second ajutage (21) du maître-cylindre (12) et dans un autre circuit de frein (II), la pompe haute pression (75) est reliée du côté de l'aspiration, par un distributeur à tiroir (76) à travers le quatrième ajutage (24) du maître-cylindre principal (12), et
lorsque la pédale de frein (11) n'est pas actionnée, en mode de freinage automatique, la pompe basse pression (84) fournit la pression d'alimentation aux pompes à haute pression (64, 75).

3. Système de freinage hydraulique de véhicule selon la revendication 1,
**caractérisé en ce que**
la soupape (34) comporte un organe d'obturation (44) logé dans son boîtier (37), et en appui contre un ressort de soupape (46), et pour une course partielle cet organe commande une section d'étranglement (47) alors que pour une course résiduelle, il ouvre l'orifice de passage.

4. Système de freinage hydraulique de véhicule selon la revendication 3,
**caractérisé en ce que**
la soupape (34) comporte dans son boîtier (37) un perçage (39) essentiellement cylindrique avec un fond (40) et une embouchure (41) associée au premier ajutage (20) du maître-cylindre (12),
le perçage (39) reçoit un ressort hélicoïdal comme ressort de soupape (46) et l'organe d'obturation (44) en forme de bille, et
le perçage (39) communique du côté éloigné de l'embouchure avec l'orifice de débordement (42).

5. Système de freinage hydraulique de véhicule selon la revendication 4,
**caractérisé en ce que**
le perçage (39) du boîtier (37) comporte une déviation de section entre l'embouchure (41) et l'orifice de trop plein (42), cette déviation de section étant formée par exemple par une rainure longitudinale (50, 51) constante ou de section diminuant vers le fond (40) ou d'un segment de perçage (52) qui s'élargit suivant une forme conique en direction de l'embouchure (41).

6. Système de freinage hydraulique de véhicule selon la revendication 4,
**caractérisé en ce que**
la soupape (34) comprend un boîtier (37) en forme de cartouche et se logeant dans le premier ajutage (20) du maître-cylindre (12),
l'embouchure (41) du perçage (39) étant associée à la première chambre de pression (19) du maître-cylindre (12) et l'orifice de débordement (42) étant associé au réservoir (14) de liquide hydraulique.

7. Système de freinage hydraulique de véhicule selon la revendication 6,
**caractérisé en ce que**
la soupape (34) est engagée dans un premier ajutage (31) du réservoir (14) de liquide hydraulique en pénétrant dans le premier ajutage (20) du maître-cylindre (12).
